# EUROPEAN PATENT APPLICATION

(11) **EP 2 511 650 A1**
(43) Date of publication of application: **17.10.2012**
(21) Application number: 12160159.5
(22) Date of filing: 19.03.2012
(51) Int. Cl.: G01B 11/02, G06T 7/60

(54) **Method for capturing a size of an installation space for a door or window**

(30) Priority: 13.04.2011 TW 100112833
(71) Applicant: Taroko Door & Window Technologies, Inc., Kaohsiung City (TW)
(72) Inventor: Chou, Kuo-Chung, Daliao Dist., Kaohsiung City (TW); Hsu, Quang-Cherng, Daliao Dist., Kaohsiung City (TW); Sheng, Bo-Feng, Daliao Dist., Kaohsiung City (TW)
(74) Representative: Beck & Rössig European Patent Attorneys

(57) **Abstract**

A method for capturing a size of an installation space for a door/window using remote image includes providing an installation space for a door/window (10) having an edge (10a), disposing a size-calibrating member (20) at one side of the edge (10a) of the installation space for the door/window (10), using an image capturing device (30) to acquire an image (40) that contains with the installation space for the door/window (10) and the size-calibrating member (20), transmitting mentioned image (40) to an image measurement system (50), using the image measurement system (50) to analyze the image (40) and determine an image ratio between the installation space for the door/window (10) and the size-calibrating member (20), and a practical size of the installation space for the door/window (10) can be figured out based on mentioned image ratio and a practical size of the size-calibrating member (20).

## Description

The present invention is generally related to a method for capturing a size of an installation space for a door/window, which particularly relates to the method for capturing a size of an installation space for the door/window using a remote image.

### BACKGROUND OF THE INVENTION

A size of an installation space has to firstly acquire prior to manufacturing a door/window. By means of obtained size, the produced door/window can be perfectly matched with the installation space. A conventional method for acquiring the size of the installation space for the door/window is to send human to proceed with practical measurement of mentioned installation space for places that require to be installed. However, when the installation place is located far away, a traffic and labor costs may derive from a measurement via a human and lead an increase of installation fees for the door/window. Besides, in practical measurement, the building owner or the building contractor must await the human to finish the measurement therefore causing a time waste.

### SUMMARY

The primary object of the present invention is to provide a method for capturing a size of an installation space for a door/window for achieving labor cost savings and measurement convenience.

In order to solve this technical problem the invention provides a method for capturing a size of an installation space for a door/window as defined by claim 1. Advantageous embodiments are indicated in further claims.

The method comprises the following steps: First, providing an installation space for a door/window, mentioned installation space for the door/window comprises at least one edge, disposing a size-calibrating member at one side of the edge of the installation space for the door/window, using an image capturing device to acquire an image that contains with the installation space for the door/window and the size-calibrating member, transmitting mentioned image to an image measurement system, using the image measurement system to analyze the image and determine an image ratio between the installation space for the door/window and the size-calibrating member, and a practical size of the installation space can be figured out based on mentioned image ratio and a practical size of the size-calibrating member.

This invention enables to capture the image and obtains the practical size of the installation space for the door/window from far distance, which may efficiently save labor cost. Besides, anyone can use the portable mobile apparatus with image capturing function to proceed with size measurement. Therefore, the building owner or the building contractor may scant the waste of measurement time.

### DESCRIPTION OF THE DRAWINGS

FIG. 1 is a flow illustrating a method for capturing a size of an installation space for a door/window in accordance with a preferred embodiment of the present invention.
FIGS. 2A to 2E are schematic diagrams illustrating the method for capturing a size of an installation space for a door/window in accordance with a preferred embodiment of the present invention.
FIG. 3 is a schematic diagram illustrating a size-calibrating member disposed inside the installation space for a door/window in accordance with a preferred embodiment of the present invention.
FIG. 4 is a schematic diagram illustrating a size-calibrating member disposed outside the installation space for a door/window with a preferred embodiment of the present invention.
FIG. 5 is another schematic diagram illustrating a size-calibrating member disposed inside the installation space for a door/window in accordance with a preferred embodiment of the present invention.
FIG. 6 is a schematic diagram illustrating a size-calibrating member disposed at an edge of the installation space for a door/window in accordance with a preferred embodiment of the present invention.
FIG. 7 is a schematic diagram illustrating a size-calibrating member disposed at one side of the edge of the installation space for a door/window in accordance with a preferred embodiment of the present invention.

### DETAILED DESCRIPTION OF THE INVENTION

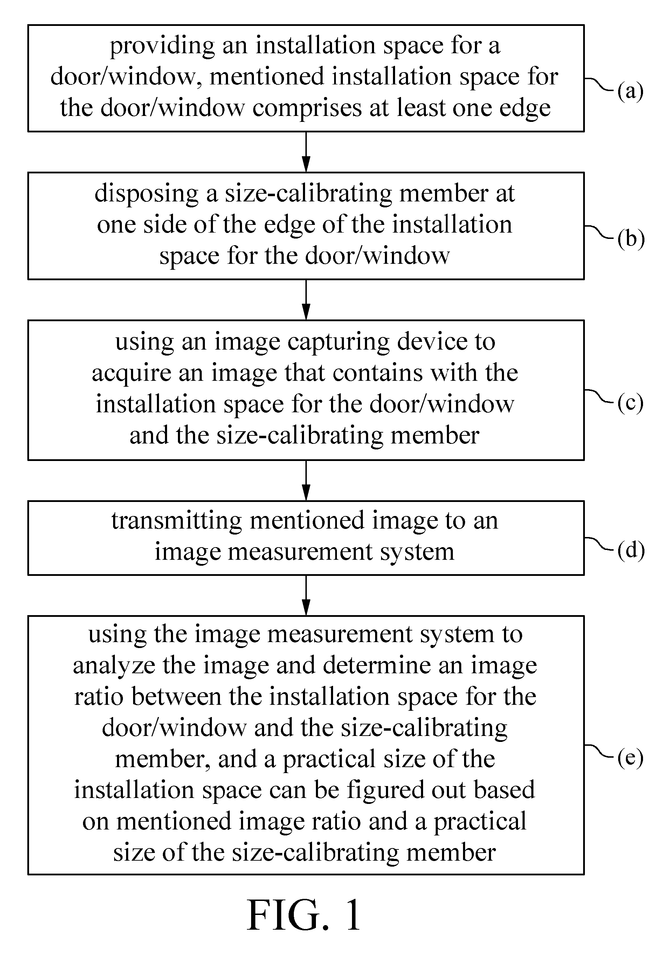

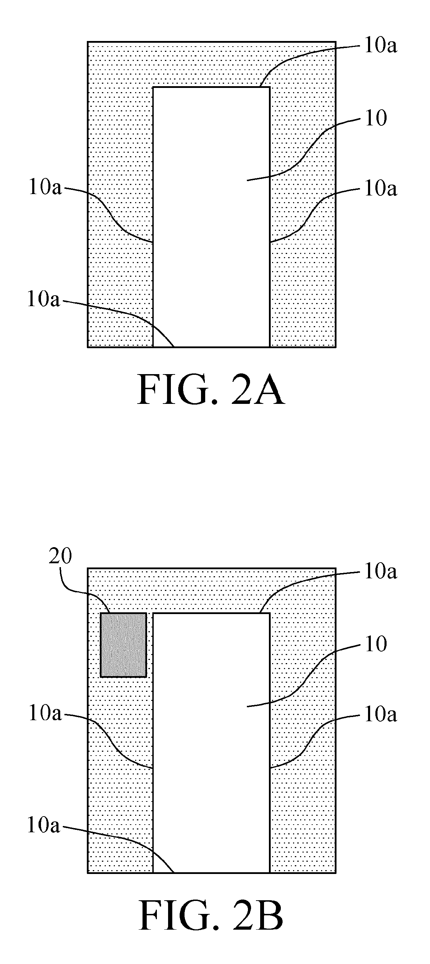

With reference to Fig. 1 and Figs. 2A to 2E, a method for capturing a size of an installation space for a door/window in accordance with a preferred embodiment of this invention includes the steps described as followed.

First, with reference to step (a) of Fig. 1 and Fig. 2A, an installation space for a door/window 10 utilized for pre-measuring is provided, and the installation space for a door/window 10 is located at far distance. The mentioned installation space for the door/window 10 comprises at least one edge 10a in this embodiment, and the installation space for the door/window 10 comprises four edges 10a.

Next, referring to step (b) of Fig. 1 and Fig. 2B, at least one size-calibrating member 20 is disposed at one side of the edge 10a of the installation space for the door/window 10, in this embodiment, the practical size of the size-calibrating member 20 is a known value, preferably, the size-calibrating member 20 is an A4 paper. In other words, the size-calibrating member 20 has a known size.

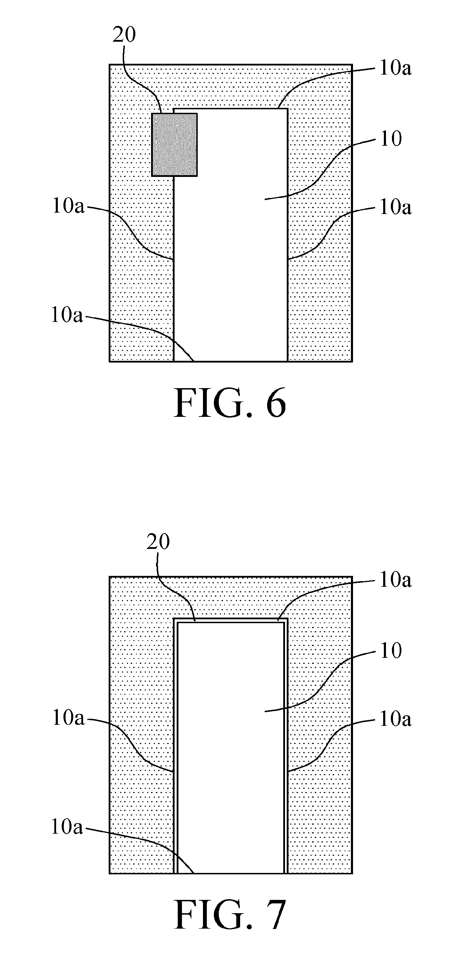

Or, with reference to Fig. 7, in another embodiment, the size-calibrating member 20 can be a door/window frame disposed at the edge 10a. The door/window frame may be disposed at the edge 10a of the installation space for the door/window 10 while a building is built, and the practical size of the installed door/window frame can be obtained upon door/window types or door/window supplier categories. Therefore, to utilize the door/window frame as the size-calibrating member 20 is another embodiment of this invention. Besides, referring to Fig. 2B again, in this embodiment, the size-calibrating member 20 can be disposed outside the installation space for the door/window 10.

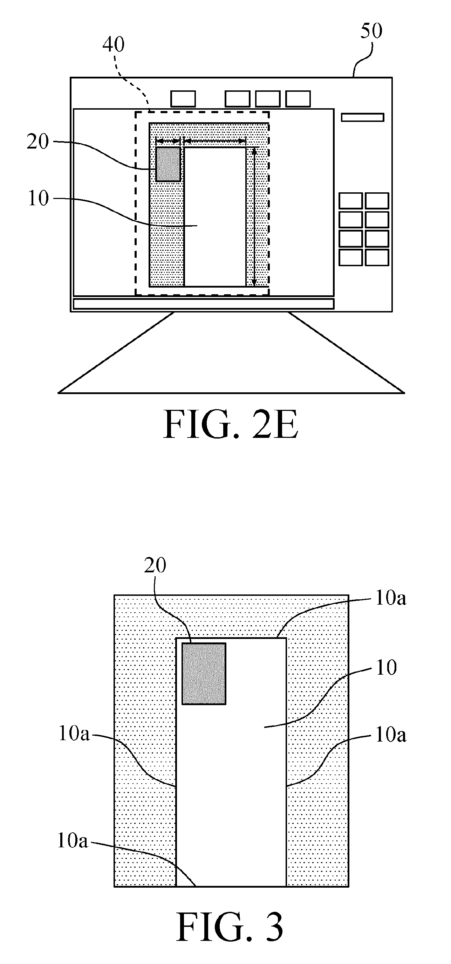

Or, with reference to Fig. 3, in another embodiment, the size-calibrating member 20 can be disposed inside the installation space for the door/window 10. Or, in another embodiment, the size-calibrating member 20 can be disposed at the edge 10a of the installation space for the door/window 10.

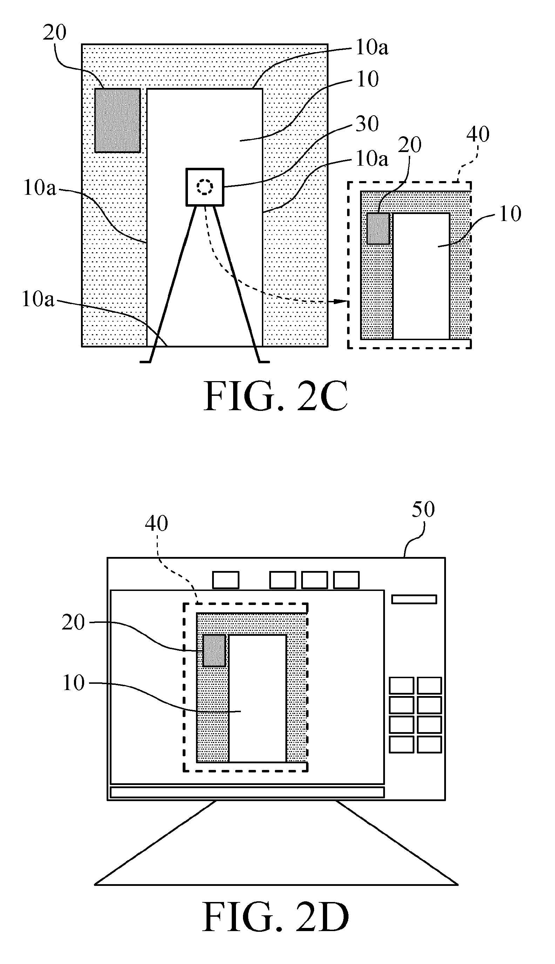

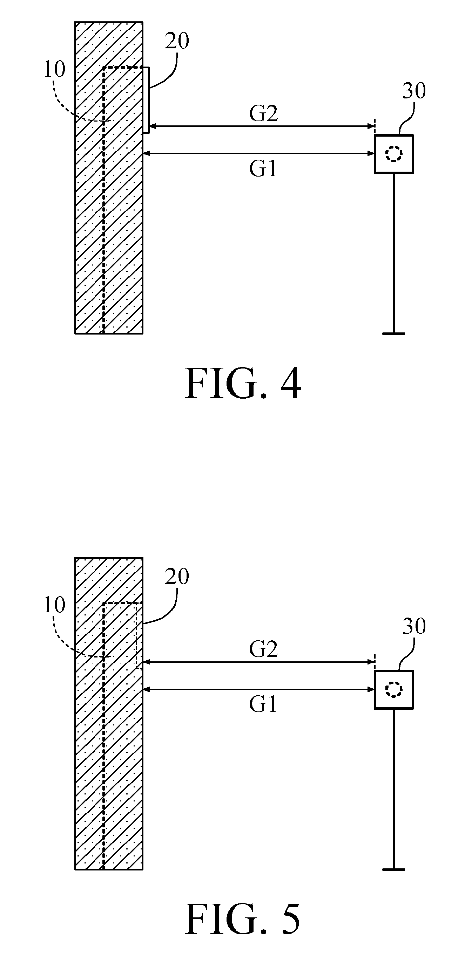

Thereafter, referring to step(c) of Fig. 1 and Fig. 2C, an image capturing device 30 is used to acquire an image 40 that contains with the installation space for the door/window 10 and the size-calibrating member 20. With reference to Fig. 4, a first interval G1 is formed between the installation space for the door/window 10 and the image capturing device 30, a second interval G2 is formed between the size-calibrating member 20 and the image capturing device 30, in this embodiment, when the size-calibrating member 20 disposes outside the installation space for the door/window 10, the second interval G2 is smaller than the first interval G1. Owning to the reason that the second interval G2 is smaller than the first interval G1, the image capturing distance of the installation space for the door/window 10 differs from that of the size-calibrating member 20 to probably lead measurement errors. Therefore, an image capturing difference is considerable while the image capturing is proceeding.

Or, referring to Fig. 5, when size-calibrating member 20 disposes inside the installation space for the door/window 10, the second interval G2 is not bigger than the first interval G1, preferably, the second interval G2 is equal to the first interval G1 so as to obtain the most accurate size of the installation space for the door/window 10 with zero image capturing difference.

Subsequently, referring to step (d) of Fig. 1 and Fig. 2D, the mentioned image 40 is transmitted to an image measurement system 50. In this embodiment, the image 40 can be transmitted to the image measurement system 50 by a portable mobile apparatus (not shown in Figs.). The image measurement system 50 can be a measurement system in conjunction with Visual Basic (VB) program and Matrox Imaging Library which is utilized in conventional residence door/window. Therefore, the image measurement system 50 possesses functions of image processing and image capturing. In addition, the image measurement system 50 is capable of being executed in the portable mobile apparatus or other electronic devices with soft execution functions.

Eventually, with reference to step (e) of Fig. 1 and Fig. 2E, the image measurement system 50 is used to analyze the image 40 and determine an image ratio between the installation space for the door/window 10 and the size-calibrating member 20, and a practical size of the installation space for the door/window 10 can be figured out based on mentioned image ratio and a practical size of the size-calibrating member 20.

This invention captures the image 40 and obtains the practical size of the installation space for the door/window 10 from a far distance, which may efficiently save labor costs. In other words, the image 40 may be taken from a position spaced apart from the installation space. Besides, anyone can use the portable mobile apparatus with image capturing function to proceed with size measurement. Therefore, the building owner or the building contractor may scant the waste of measurement time.

While this invention has been particularly illustrated and described in detail with respect to the preferred embodiments thereof, it will be clearly understood by those skilled in the art that it is not limited to the specific feature and describes and various modifications and changes in form and details may be made without departing from the scope of the claims.

## Claims

1. A method for capturing a size of an installation space for a door/window (10) by using a remote image (40), including:
providing an installation space for a door/window (10) wherein the mentioned installation space for the door/window (10) comprises at least one edge (10a);
disposing a size-calibrating member (20) at one side of the edge (10a) of the installation space for the door/window (10);
using an image capturing device (30) to acquire an image (40) that contains the installation space for the door/window (10) and the size-calibrating member (20);
transmitting the mentioned image (40) to an image measurement system (50); and
using the image measurement system (50) to analyze the image (40) and determine an image ratio between the installation space for the door/window (10) and the size-calibrating member (20) to thereby figure out the size of the installation space for a door/window (10) based on the mentioned image ratio and the size of the size-calibrating member (20).

2. The method for capturing a size of an installation space for a door/window using remote image in accordance with claim 1, wherein the size-calibrating member (20) is disposed inside the installation space for the door/window (10).

3. The method for capturing a size of an installation space for a door/window using remote image in accordance with claim 1 or 2, wherein a first interval (G1) is formed between the installation space for the door/window (10) and the image capturing device (30), a second interval (G2) is formed between the size-calibrating member (20) and the image capturing device (30), and the second interval (G2) is not smaller than the first interval (G2).

4. The method for capturing a size of an installation space for a door/window using remote image in accordance with claim 3, wherein the second interval (G2) is equal to the first interval (G1).

5. The method for capturing a size of an installation space for a door/window using remote image in accordance with claim 1, wherein the size-calibrating member (20) is disposed outside the installation space for the door/window (10).

6. The method for capturing a size of an installation space for a door/window using remote image in accordance with claim 5, wherein a first interval (G1) is formed between the installation space for the door/window (10) and the image capturing device (30), a second interval (G2) is formed between the size-calibrating member (20) and the image capturing device (30), and the second interval (G2) is smaller than the first interval (G2).

7. The method for capturing a size of an installation space for a door/window using remote image in accordance with claim 1, wherein the size-calibrating member (20) is a door/window frame disposed at one side of the edge (10a).

8. The method for capturing a size of an installation space for a door/window using remote image in accordance with one of claims 1 to 7, wherein the image (40) is transmitted to the image measurement system (50) by a portable mobile apparatus.

9. The method for capturing a size of an installation space for a door/window using remote image in accordance with claim 8, wherein the image measurement system (50) is capable of being executed in the portable mobile apparatus.
